Europäisches Patentamt

**European Patent Office**

Office européen des brevets

(19)

(11) Veröffentlichungsnummer: **0 054 868**
**B1**

(12) **EUROPÄISCHE PATENTSCHRIFT**

(45) Veröffentlichungstag der Patentschrift:
**10.04.85**

(51) Int. Cl.⁴: **B 01 J 2/20**, B 01 D 9/00

(21) Anmeldenummer: **81110381.1**

(22) Anmeldetag: **12.12.81**

(54) **Verfahren zur Herstellung von Granulaten aus organischen, in Form einer Schmelze vorliegenden Stoffen.**

(30) Priorität: **24.12.80 DE 3049196**

(43) Veröffentlichungstag der Anmeldung:
**30.06.82 Patentblatt 82/26**

(45) Bekanntmachung des Hinweises auf die Patenterteilung:
**10.04.85 Patentblatt 85/15**

(84) Benannte Vertragsstaaten:
**BE DE GB IT**

(56) Entgegenhaltungen:
**FR - A - 1 166 471**
**FR - A - 2 056 439**

(73) Patentinhaber: **BAYER AG, Konzernverwaltung RP Patentabteilung, D-5090 Leverkusen 1 Bayerwerk (DE)**

(72) Erfinder: **Müller, Ernst-Willi, Dr., Heymannstrasse 67, D-5090 Leverkusen (DE)**
Erfinder: **Rathjen, Claus, Dipl.-Ing., Theodor-Heuss-Ring 78, D-5090 Leverkusen (DE)**

ACTORUM AG

## Beschreibung

Die Erfindung betrifft ein Verfahren zur Herstellung von Granulaten aus organischen, in Form einer Schmelze vorliegenden Stoffen, die durch Kühlkristallisation in einer Zweiwellenschneckenmaschine zu einer kristallinen Masse erstarren, anschliessend Extrusion durch eine Lochplatte am Ende der Schneckenmaschine und Nachkühlung des extrudierten Produktes.

Zum Kristallisieren und Formgeben der Chemikalien werden üblicherweise Kühlbänder mit vorgeschalteter Pastilliermaschine, wie sie z.B. in der Veröffentlichung von G. Matz in Chem. Inq. Techn. 52 (1980) Nr. 7 beschrieben worden sind, eingesetzt. Im Falle von Kautschukchemikalien sind die so erzeugten Pastillen jedoch wegen ihrer inneren Struktur (grosse Kristalle) schlecht in die Kautschukmischungen einmischbar.

In Kristallisierschnecken mit offenem Produktaustritt, wie sie ausführlich von H. Herrmann in «Schneckenmaschinen in der Verfahrenstechnik» (Springer-Verlag, 1972) beschrieben sind, wird ein Korngemisch erzielt, dass zwar gut in den Kautschuk einmischbar ist, jedoch ein sehr unterschiedliches Kornspektrum mit hohem, nicht gewünschtem Staubanteil aufweist. Ein nicht staubendes Produkt ist jedoch aus Gründen der Arbeitshygiene unbedingt erforderlich.

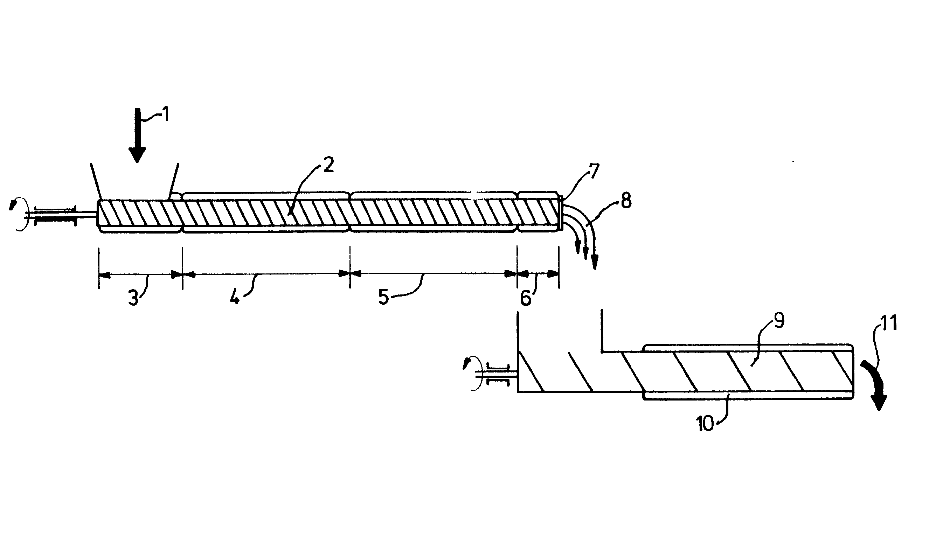

In der Firmenschrift «Chemie-Technik» von Werner & Pfleiderer (erschienen Mai 1979) wird die grundsätzliche verfahrenstechnische Lösung der Kristallisation in Schneckenmaschinen mit anschliessender Strangextrusion und Nachkühlung des extrudierten Produktes beschrieben (siehe insbesondere Fig. 8 auf Seite 6). Den oben erwähnten Problemen im Hinblick auf die physikalischen Produkteigenschaften wird jedoch keine Beachtung geschenkt.

Der Erfindung liegt die Aufgabe zugrunde, ausgehend von dem zuletzt beschriebenen Kristallisationsverfahren organische Chemikalien in eine staubarme, gut dosierbare durchkristallisierte, transportstabile und gut einmischbare Form zu bringen.

Diese Aufgabe wird erfindungsgemäss dadurch gelöst, dass die Temperatur in der Schneckenmaschine, ihre Drehzahl und die Temperatur der Lochplatte am Ende der Schneckenmaschine so eingestellt werden, dass bis zum Ende der Schnecke 70 bis 99,5%, vorzugsweise 95–99,5%, des Materials erstarrt und der Restanteil der flüssigen Phase erst bei der Nachkühlung auskristallisiert wird, wobei die extrudierten Stränge gleichzeitig gebrochen werden. Beim Durchtritt durch die für die Formgebung massgebende Lochplatte ist also noch ein kleiner Restschmelzanteil vorhanden. Durch diese Verfahrensweise ist gewährleistet, dass einerseits die Masse überhaupt zu zylindrischen Strängen extrudiert werden kann und dass andererseits diese Stränge unmittelbar hinter der Lochplatte weder aneinander noch an Maschinenteilen kleben. Die Stränge werden im nachgeschalteten Kühlorgan gebrochen.

Überraschenderweise wurde gefunden, dass man auf diese Weise ein Zylindergranulat erhalten kann, dass durch besondere Staubfreiheit ausgezeichnet ist. Letzteres ist für die umweltfreundliche Weiterverarbeitung von entscheidender Bedeutung. Dieses Verfahren eignet sich auch dann besonders gut, wenn organische Substanzen mit geringer Kristallisationsgeschwindigkeit vorliegen, oder solche, die stark zur Unterkühlung neigende Schmelzen bilden. Die zur Kristallisation notwendigen Verweilzeiten sind gegenüber dem bekannten Kristallisierband deutlich kürzer. Besonders hervorzuheben ist die hervorragende Einmischbarkeit in Kautschukmischungen des so hergestellten Zylindergranulats. So ist z.B. für das Zylindergranulat die Zeit bis zur Homogenisierung in einer Kautschukmischung unter sonst gleichen Bedingungen für das als Vulkanisationsbeschleuniger eingesetzte Benzothiazyl-2-sulfen-morpholid nur $1/3$ bis $1/5$ gegenüber der Zeit, die benötigt wird, wenn das gleiche Material, jedoch als Pastille, hergestellt nach den oben erwähnten Pastillierverfahren, eingesetzt wird.

Das erfindungsgemässe Verfahren eignet sich insbesondere zur Granulierung von Verbindungen aus der Gruppe der Sulfenamide oder Sulfenimide cyclischer Acetale, insbesondere solche mit ungesättigten Gruppen und aromatischer Amine. Besonders bewährt hat sich das erfindungsgemässe Verfahren zur direkten Herstellung der hochschmelzenden Form des Benzothiazyl-2-sulfenyl-morpholids, das polymorph ist und in zwei verschiedenen Formen mit den Schmelzpunkten von 72° bzw. 84° vorkommt. Bei den bisher benutzten Verfahren entsteht aus der Schmelze stets zuerst die niedrigschmelzende Form, die sich exotherm im Verlauf von bis zu 15 Stunden bei 72 °C, oder bis zu 30 Tagen bei 15° (s. auch J. Heterocyclic Chem. 15, 1531 (1978) ) in die hochschmelzende Form umlagert. Durch die Umwandlungswärme können im Material unerwünscht hohe und schädliche Temperaturen entstehen, die zur Zersetzung und Klumpenbildung führen können. Die direkte Herstellung der hochschmelzenden Form bedeutet in diesem Fall mehr Lagersicherheit und Wegfall sonst notwendiger Wartezeiten bis zur Umlagerung.

Ein weiterer Vorteil des erfindungsgemässen Verfahrens ist die Möglichkeit, direkt in die Kristallisierschnecke feste oder auch flüssige Zusatzstoffe wie Wachs, Harze, Öle oder Kaolin etc., durch geeignete Dosiereinrichtungen einspeisen zu können. Das so erhaltene homogene Gemisch in Form eines Zylindergranulats hat alle Vorteile der reinen Substanz, wie Staubfreiheit, gute Weiterverarbeitbarkeit und gute Dosierbarkeit.

Im folgenden wird die Erfindung anhand von Ausführungsbeispielen näher erläutert. Die Figur zeigt eine zur Durchführung des erfindungsgemässen Verfahrens geeignete Apparatur.

Die Schmelze 1 fliesst in eine gleichsinnig rotierende, selbstreinigende Doppelschnecke 2 mit 32 mm Wellenaussendurchmesser, 1100 mm Verfahrenslänge und 0,17 m² Wärmeaustauschfläche. Die Schnecke ist mit unterschiedlich temperierbaren Kühlmänteln 3, 4, 5 und 6 versehen.

Auf der Produktaustrittsseite ist eine heizbare Lochplatte 7 montiert. Während des Transportes durch die Schnecke findet der Kristallisationsvorgang statt. Beim Austritt durch die Lochplatte ist das Material vorzugsweise zu 95–99,5% durchkristallisiert. Der kleine Restschmelzanteil ist erforderlich, um dem Material die zur Extrusion erforderliche Plastizität zu verleihen. Die Lochplatte 7 wird temperiert, um ein Zukristallisieren der Löcher zu verhindern. Die Lochplattentemperatur wird bevorzugt im Bereich von ca. ± 20 °C der Schmelztemperatur des Produktes gehalten. Zu hohe Lochplattentemperaturen haben ein Anschmelzen und damit Verkleben der Stränge zur Folge.

Im Gegensatz zu den bisher angewandten Kristallisierschnecken, bei denen die Schnecke ausserhalb des Produktraumes gelagert ist, enden bei der hier beschriebenen Apparatur die Schneckenwellen dicht (0 bis 5 mm) vor der Lochplatte. Hierdurch wird der Raum zwischen Schneckenwellenende und Lochplatte klein gehalten, was für das reibungslose Funktionieren unerlässlich ist. Wegen der am Schneckenaustritt montierten Lochplatte 7 müssen die Wellen produktintern gelagert werden. Das Kühlmedium für die Welle wird durch das Verteilergetriebe in die Welle geleitet (nicht gezeichnet).

Die an der Lochplatte 7 austretenden Stränge 8 werden in einer nachfolgenden Einwellenschnecke 9 (Kühlmantel 10) nachgekühlt und zerkleinert. An ihrem Ende tritt das fertige lagerstabile Granulat 11 aus.

Der für die Granulatbildung wesentliche Grad der Durchkristallisation beim Durchtritt durch die Lochplatte 7 wird über die Kühltemperaturen in den Kühlzonen 3, 4, 5 und 6 und die Wellendrehzahl eingestellt. Dabei geht man so vor, dass die Kühlmitteltemperaturen in den Zonen 3, 4, 5 und 6 zunächst höher eingestellt werden als der Schmelzpunkt des Materials. Die Drehzahl der Schnecke wird so gewählt, dass bei vorgegebenem Durchsatz einerseits kein Produktstau am Eingang der Schneckenmaschine auftritt und andererseits die Schneckengänge nahezu vollständig mit der Schmelze gefüllt sind. Bei einer zu hohen Drehzahl würden die in der Maschine zur Verfügung stehenden Wärmeaustauschflächen ungenügend ausgenutzt. Anschliessend wird die Kühlmitteltemperatur der Zonen 3, 4, 5 und 6 soweit herabgesetzt, dass der Kristallisationsgrad der aus der Schneckenmaschine austretenden Stränge 8 zwischen 70% und 99,5% liegt. Damit wird gleichzeitig sichergestellt, dass die Stränge 8 nicht mehr aneinander kleben. Zur Bestimmung des Kristallisationsgrades wird folgendes empirische Verfahren angewandt: Man misst jeweils im Gleichgewichtszustand die Temperatur des Zylindergranulats 8 unmittelbar hinter der Lochplatte 7 von aussen mit einem Thermofühler und gleichzeitig die sich einstellende Temperatur des Zylindergranulats, das man in ausreichender Menge in ein Dewar-Gefäss hat rieseln lassen. In dem Dewar-Gefäss findet dann die Restkristallisation statt. Sie ist abgeschlossen, wenn die Temperatur nicht weiter steigt. Aus der Differenz der Temperatur, die je nach Substanz zwischen 0,5 °C und 15 °C liegt, lässt sich bei Kenntnis der Kristallisationswärme und der spezifischen Wärme der im Dewar-Gefäss kristallisierte Anteil errechnen. Entsprechend dem oben erwähnten Bereich von 70% bis 99,5% für den Kristallisationsgrad muss dieser Anteil zwischen 30% und 0,5% liegen.

Im Nachkühlapparat (Einwellenschnecke 9) werden die aus der Lochplatte austretenden Produktstränge 8 gebrochen. Es entsteht ein Zylindergranulat mit annähernd gleichem Querschnitt und Längen, die im Mittel 10 mal so gross sind wie ihr Durchmesser. Der Querschnitt der Stränge wird durch die Löcher in der Lochplatte 7 bestimmt. Durch die Druckdifferenz, die sich aus dem Druck vor der Lochplatte 7 und dem Atmosphärendruck hinter der Lochplatte ergibt und durch das Abkühlen der Stränge im Nachkühlapparat 9, wird ebenfalls der Querschnitt der Stränge beeinflusst. Die Druckdifferenz bewirkt eine Expansion und das Abkühlen eine Kontraktion der Stränge. Die Abweichungen des Strangdurchmessers zum Lochplattendurchmesser betragen bis zu ± 20%. Bevorzugt soll das Zylindergranulat einen Kreisquerschnitt mit einem Durchmesser von ca. 2,5 mm aufweisen.

Die Zylindergranulate setzen sich aus vielen kleinen Partikeln zusammen. Die Brücke zwischen den Partikeln wird durch die auskristallisierte Restschmelze gebildet. Der Durchmesser dieser Partikel beträgt 0,1 bis 50 µm.

Die Produkteigenschaften (staubarm, transportstabil und gute Einmischbarkeit) können durch die Betriebsparameter, Wellendrehzahl und Kühlmitteltemperatur beeinflusst werden. Ein höherer Restschmelzanteil verstärkt die Brückenbildung und damit die Transportstabilität, verschlechtert aber die Einmischbarkeit. Höhere Wellendrehzahlen verringern den Partikeldurchmesser und verbessern hierdurch die Einmischbarkeit.

1. Beispiel

| Produkt: | Diisooctyldiphenylamin |
|---|---|
| Lochplatte – | |
|    Lochdurchmesser: | 1,5 mm |
|    Anzahl der Löcher: | 10 |
| Drehzahl: | 50 min$^{-1}$ |
| Produkteintrittstemperatur: | 115 °C |
| Kühlzonen: 3 und 4 | 110 °C |
|            5 und 6 | 35 °C |
| Produktaustrittstemperatur: | 65 °C |
| Durchsatz: | 17 kg/h |
| Temperatur der Lochplatte: | 70 °C |

2. Beispiel

Produkt: Benzothiazyl-2-sulfenyl-morpholid

Lochplatte –
   Lochdurchmesser: 1,5 mm
   Anzahl der Löcher: 10
Drehzahl: $35 \text{ min}^{-1}$
Produkteintrittstemperatur: 102 °C
Kühlzonen: 3 und 4 100 °C
          5 und 6 30 °C
Produktaustrittstemperatur: 72 °C
Durchsatz: 15 kg/h
Temperatur der Lochplatte: 78 °C.

Das so hergestellte Produkt lässt sich auf der Walze bei 50 °C innerhalb von 3 Minuten im Naturkautschuk Defo 2000 homogen verteilen.

3. Beispiel

Produkt: N-(1,3-Dimethyl-butyl)-N'-phenyl-p-phenylendiamin)

Lochplatte –
   Lochdurchmesser: 2,5 mm
   Anzahl der Löcher: 8
Drehzahl: $30 \text{ min}^{-1}$
Produkteintrittstemperatur: 100 °C
Kühlzonen: 3, 100 °C
         4, 5 und 6 15 °C
Produktaustrittstemperatur: 37 °C
Durchsatz: 11 kg/h
Temperatur der Lochplatte: 40 °C.

4. Beispiel

Produkt: Kondensationsprodukt aus 2 Mol Tetrahydrobenzaldehyd u. 1 Mol Pentaerythrit

Lochplatte –
   Lochdurchmesser: 2,5 mm
   Anzahl der Löcher: 10
Drehzahl: $35 \text{ min}^{-1}$
Produkteintrittstemperatur: 110 °C
Kühlzonen: 3 und 4, 104 °C
         5 und 6 16 °C
Produktaustrittstemperatur: 63 °C
Durchsatz: 10 kg/h
Temperatur der Lochplatte: 85 °C.

5. Beispiel

Produkt: Wie Beispiel 4, jedoch mit 20% Antilux 500 Wachs
Lochplatte –
   Lochdurchmesser: 2,5 mm
   Anzahl der Löcher: 10
Drehzahl: $35 \text{ min}^{-1}$
Produkteintrittstemperatur: 105 °C
Kühlzonen: 3 und 4, 106 °C
         5 und 6 16 °C

Produktaustrittstemperatur: 65 °C
Durchsatz: 15 kg/h
Temperatur der Lochplatte: 80 °C

6. Beispiel

Produkt: Wie Beispiel 4, jedoch mit 50% Kaolin-Staub
Lochplatte –
   Lochdurchmesser: 2,5 mm
   Anzahl der Löcher: 10
Drehzahl: $90 \text{ min}^{-1}$
Produkteintrittstemperatur: 110 °C
Kühlzonen: 3 und 4, 110 °C
         5 und 6 50 °C
Produktaustrittstemperatur: 60 °C
Durchsatz: 15 kg/h
Temperatur der Lochplatte: 75 °C.

7. Beispiel

Produkt: Cyclohexylthiophthalimid

Lochplatte –
   Lochdurchmesser: 2,5 mm
   Anzahl der Löcher: 5
Drehzahl: $50 \text{ min}^{-1}$
Produkteintrittstemperatur: 110 °C
Kühlzonen: 3 und 4, 110 °C
         5, 16 °C
         6 55 °C
Produktaustrittstemperatur: 80 °C
Durchsatz: 10 kg/h
Temperatur der Lochplatte: 90 °C.

**Patentansprüche**

1. Verfahren zur Herstellung von Granulaten aus organischen, in Form einer Schmelze vorliegenden Stoffen, die durch Kühlkristallisation in einer Zweiwellenschneckenmaschine zu einer kristallinen Masse erstarren, anschliessende Extrusion durch eine Lochplatte am Ende der Schnekkenmaschine und Nachkühlung des extrudierten Produktes, dadurch gekennzeichnet, dass die Temperatur in der Schneckenmaschine, ihre Drehzahl und die Temperatur der Lochplatte so eingestellt werden, dass bis zum Ende der Schnecke 70% bis 99,5%, vorzugsweise 95 bis 99,5%, des Materials erstarrt und der Restanteil der flüssigen Phase erst bei der Nachkühlung auskristallisiert wird, wobei die extrudierten Stränge gleichzeitig zu dem fertigen lagerstabilen Granulat gebrochen werden.

2. Verfahren nach Anspruch 1, dadurch gekennzeichnet, dass die Lochplatte auf einer Temperatur im Bereich von ca. ± 20° der Schmelztemperatur des Produktes gehalten wird.

3. Verfahren nach Anspruch 1 bis 2, dadurch gekennzeichnet, dass in die Kristallisierschnecke feste oder flüssige Zuschlagstoffe eindosiert werden.

4. Verfahren nach Anspruch 1 bis 3, dadurch gekennzeichnet, dass eine Schmelze aus der Gruppe der Sulfenamide oder Sulfenimide verwendet wird.

5. Verfahren nach Anspruch 1 bis 3, dadurch gekennzeichnet, dass eine Schmelze aus der Gruppe cyclischer Acetale, insbesondere solche mit ungesättigten Gruppen, verwendet wird.

6. Verfahren nach Anspruch 1 bis 3, dadurch gekennzeichnet, dass eine Schmelze aus der Gruppe der aromatischen Amine verwendet wird.

7. Verfahren nach Anspruch 1 bis 3, dadurch gekennzeichnet, dass eine Schmelze von Benzothiazyl-2-sulfenyl-morpholid verwendet wird.

## Revendications

1. Procédé de fabrication de granules de matières organiques se présentant sous forme d'une masse fondue et se solidifiant en une masse cristalline par cristallisation à froid dans une machine à vis sans fin à deux arbres, avec extrusion ultérieure à travers une plaque perforée prévue à l'extrémité de la machine à vis sans fin et refroidissement ultérieur du produit extrudé, caractérisé en ce qu'on règle la température régnant dans la machine à vis sans fin, la vitesse de rotation de cette dernière et la température de la plaque perforée de telle sorte que, jusqu'à la fin de la vis sans fin, 70% à 99,5%, de préférence, 95 à 99,5% de la matière soient solidifiés et que la quantité résiduelle de la phase liquide ne soit cristallisée que lors du refroidissement ultérieur, les boudins extrudés étant en même temps broyés en granules définitifs et stables à la conservation.

2. Procédé suivant la revendication 1, caractérisé en ce que la plaque perforée est maintenue à une température se situant dans le domaine d'environ ± 20° par rapport à la température de fusion du produit.

3. Procédé suivant les revendications 1 et 2, caractérisé en ce qu'on dose des additifs solides ou liquides dans la vis sans fin de cristallisation.

4. Procédé suivant les revendications 1 à 3, caractérisé en ce qu'on utilise une masse fondue choisie parmi le groupe des sulfénamides ou des sulfénimides.

5. Procédé suivant les revendications 1 à 3, caractérisé en ce qu'on utilise une masse fondue choisie parmi le groupe des acétals cycliques, en particulier, ceux comportant des groupes insaturés.

6. Procédé suivant les revendications 1 à 3, caractérisé en ce qu'on utilise une masse fondue choisie parmi le groupe des amines aromatiques.

7. Procédé suivant les revendications 1 à 3, caractérisé en ce qu'on utilise une masse fondue de morpholide de benzothiazyl-2-sulfényle.

## Claims

1. Process for the production of granular materials from organic substances which are present in the form of a melt and which solidify to form a crystalline mass by low-temperature crystallisation in a twinscrew extruder, subsequent extrusion through a perforated plate at the end of the extruder and aftercooling the extruded product, characterised in that the temperature in the extruder, its speed of rotation and the temperature of the perforated plate are adjusted such that 70% to 99,5%, preferably 95 to 99,5% of the material solidifies by the time it reaches the end of the screw and the remaining portion of the liquid phase is not crystallised out until the aftercooling operation, during which the extruded strands are at the same time broken to form the finished storage-stable granular material.

2. Process according to Claims 1, characterised in that the perforated plate is kept at a temperature in the range between about 20° above and 20° below the melting temperature of the product.

3. Process according to Claim 1 to 2, characterised in that solid or liquid additives are metered into the crystallisation screw.

4. Process according to Claim 1 to 3, characterised in that a melt from the group of sulphenamides or sulphenimides is used.

5. Process according to Claim 1 to 3, characterised in that a melt from the group of cyclic acetals, in particular those containing unsaturated groups, is used.

6. Process according to Claim 1 to 3, characterised in that a melt from the group of aromatic amines is used.

7. Process according to Claim 1 to 3, characterised in that a melt of benzothiazyl-2-sulphenyl morpholide is used.